# FASCICULE DE BREVET EUROPEEN

(11) **EP 0 591 035 B1**
(45) Date de publication et mention de la délivrance du brevet: **25.03.1998**
(21) Numéro de dépôt: 93402353.2
(22) Date de dépôt: 27.09.1993
(51) Int. Cl.: H01G 9/02, H01G 9/00

(54) **Procédé de fabrication de condensateurs électrolytiques à couche en polymer conducteur et à faible courant de fuite**
Herstellungsverfahren von Elektrolytkondensatoren mit einer leitfähigen Polymer-Kathodenschicht und niedrigem Leckstrom
Manufacturing process of electrolytic capacitors with conductive polymer cathode layer and low current leakage

(30) Priorité: 29.09.1992 FR 9211602
(43) Date de publication de la demande: 06.04.1994
(73) Titulaire: COMMISSARIAT A L'ENERGIE ATOMIQUE, 75015 Paris (FR)
(72) Inventeur: Geffroy, Bernard, F-94240 L'Hay Les Roses (FR)
(74) Mandataire: Dubois-Chabert, Guy

(56) Documents cités:
- EP-A- 0 358 239
- US-A- 4 785 380
- DATABASE WPI Section Ch, Week 9110, Derwent Publications Ltd., London, GB; AN 91-070810 & JP-A-3 021 005 (MARCON ELECTRONICS) 29 Janvier 1991
- DATABASE WPI Week 9030, Derwent Publications Ltd., London, GB; AN 90-226613 & JP-A-2 153 516 (MATSUSHITA ELEC IND KK) 13 Juin 1990
- PATENT ABSTRACTS OF JAPAN vol. 15, no. 219 (E-1074)5 Juin 1991 & JP-A-30 064 013 (MARCON ELECTRON CO LTD)

## Description

La présente invention se rapporte aux condensateurs électrolytiques à précathode en polymère conducteur, c'est-à-dire aux condensateurs dans lesquels l'électrolyte est remplacé par un polymère conducteur, parfois qualifié abusivement d'électyrolyte, mais que nous dénommerons dans la suite du texte "précathode" selon un usage maintenant répandu qui est justifié par le fait que ce polymère conducteur n'est plus le siège, comme les anciens électrolytes liquides, de déplacements ioniques. Des composants électriques de cette nature continuent d'être appelés couramment condensateurs électrolytiques non pas parce qu'un électrolyte sépare l'anode de la cathode, mais plutôt parce qu'ils sont fabriqués par des procédés d'électrolyse.

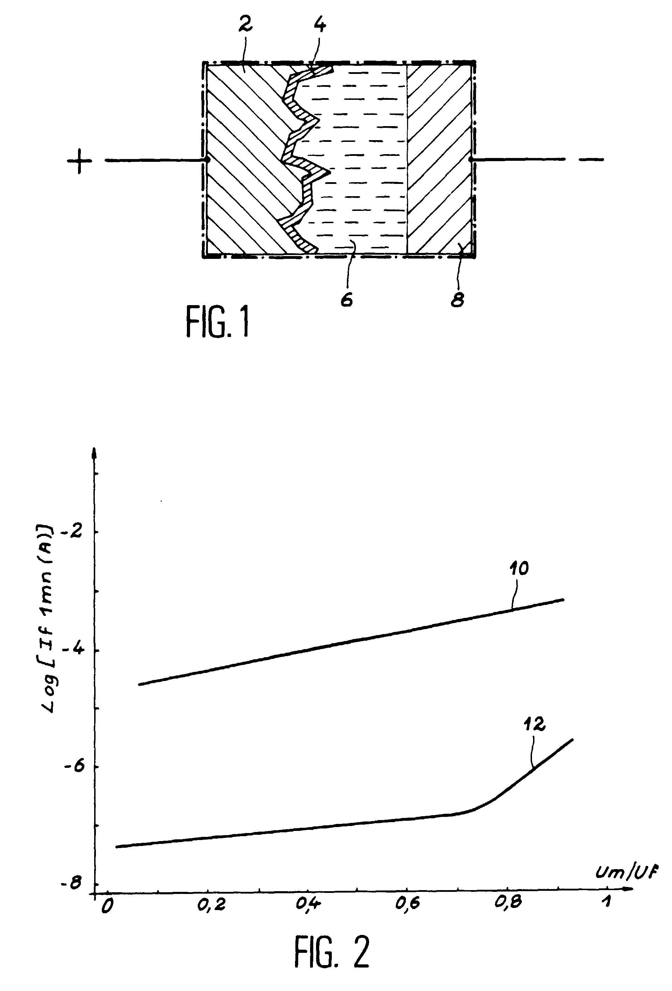

Les condensateurs électrolytiques sont largement utilisés dans l'industrie électronique à cause de leur grande capacité pour un volume réduit et de leur faible coût de production. Dans un condensateur électrolytique d'un type connu représenté sur la figure 1, l'anode 2 en aluminium ou en tantale est recouverte d'une fine couche d'oxyde diélectrique 4 obtenue généralement par oxydation anodique dans un bain électrochimique. Un électrolyte 6 assure le contact électrique entre ce diélectrique 4 et la cathode 8 constituant l'électrode négative. Il existe actuellement sur le marché principalement trois types de condensateurs électrolytiques :
- des condensateurs à l'aluminium et à électrolyte liquide ;
- des condensateurs au tantale et à électrolyte solide constitué de dioxyde de manganèse ;
- des condensateurs à l'aluminium et à électrolyte solide (de même nature que précédemment).

Néanmoins ces condensateurs électrolytiques possèdent des résistances séries relativement élevées limitant leur utilisation dans certains dispositifs électroniques modernes. C'est pourquoi on a eu recours, depuis un certain temps, au remplacement de ces électrolytes traditionnels dans un condensateur électrolytique à base d'aluminium ou de tantale par un polymère conducteur électronique jouant le rôle de précathode et conduisant à une diminution significative de la résistance série. Les polymères conducteurs électroniques possèdent en effet une conductivité électrique largement -supérieure (10 à 100 S/cm) à celle des électrolytes précédemment cités. De tels condensateurs peuvent alors être utilisés à des fréquences électriques plus élevées et acceptent des courants traversants plus importants.

Il existe différents types de polymères conducteurs. Ils sont en général formés à partir de monomères aromatiques, de composés hétérocycliques ou autres. Les polymères conducteurs concernés par cette invention sont à base de monomères tels que le pyrrole, le thiophène, l'aniline ou le benzène et leurs dérivés substitués. Le meilleurs polymère est le polypyrrole. Ces polymères sont des semiconducteurs organiques rendus conducteurs par dopage par des anions ou dans certains cas par des cations.

Les polymères conducteurs électroniques peuvent être obtenus à partir de monomères, soit par synthèse chimique, soit par synthèse électrochimique.

La synthèse chimique consiste à oxyder le monomère par un oxydant convenablement choisi. Cet agent oxydant peut en même temps servir de dopant pour le polymère qu'il rend conducteur. On peut également soumettre le monomère à un mélange constitué d'un agent oxydant et d'un dopant, ces derniers étant alors deux composés différents. La synthèse peut être effectuée en phase liquide dans des solvants organiques ou aqueux ou en phase gazeuse (exemple : vapeurs de pyrrole). Les oxydants peuvent être choisis parmi les sels ayant un potentiel d'oxydation supérieur à 0,8 V par rapport à l'électrode à hydrogène, comme par exemple les sels ferriques, les persulfates, les vanadates etc. Généralement, le dopant est constitué d'un sel contenant des anions tels que le perchlorate, le chlore, le sulfate ou des composés de type sulfonates (benzènesulfonate, alkylbenzènesulfonate, hydroxybenzènesulfonate, naphtalènesulfonate etc.)

La synthèse électrochimique consiste à appliquer un potentiel adéquat à une électrode plongée dans une solution contenant à la fois le monomère et un électrolyte support. Cet électrolyte doit contenir le dopant du polymère choisi, par exemple, parmi ceux cités dans le cas précédent. Les électrolytes supports sont constitués par exemple, à titre non limitatif, de sels de lithium, de sodium, de potassium ou d'ammonium.

Ces dernières années, différents procédés ont été proposés pour réaliser un dépôt de polymère conducteur sur la couche diélectrique d'un condensateur électrolytique à base d'aluminium ou de tantale. Ces techniques, fondées sur les méthodes de synthèse décrites précédemment, ont été décrites par exemple dans : European Patent Application n° 0274755; United States Patent N° 4,780,796; Y. KUDOH, S. TSUCHIYA, T. KOJIMA, M.FUKUYAMA et S. YOSHIMURA, Synthetic Metals, Vol. 41, N° 3, 1991, p. 1133-1136.

En plus des caractéristiques électriques qui doivent rester stables en fonction de la fréquence, (capacité, coefficient de dissipation, résistance équivalente série), les condensateurs électrolytiques doivent posséder un courant de fuite le plus faible possible à tension nominale. La valeur finale du courant de fuite dépend du procédé de fabrication et de la catégorie du condensateur. Il est par exemple connu que les courants de fuite sont plus importants (après formation de l'oxyde) dans les condensateurs électrolytiques possédant une anode préalablement gravée et oxydée sous une faible tension (<100 V). C'est justement le cas des composants visés par la présente invention.

C'est pourquoi, dans le cas des condensateurs électrolytiques connus à électrolyte solide en dioxyde de manganèse, une post-oxydation de l'anode s'avère nécessaire après la formation de l'électrolyte pour minimiser le courant de fuite. Cette post-oxydation de l'anode a pour effet de réduire les défauts éventuels de la couche de diélectrique et il est naturel et traditionnel de l'effectuer dans le même bain électrolytique que la première oxydation anodique, par exemple un bain d'acétate d'ammonium.

Comme on le voit, cette opération de post-oxydation a lieu au travers de la masse du polymère conducteur formé, ce qui implique par conséquent que celui-ci soit suffisamment poreux pour laisser passer l'électrolyte dans lequel s'effectue la post-oxydation et que les produits utilisés à cet effet n'aient pas d'action chimique destructrice sur le polymère.

Or, précisément dans la plupart des cas de condensateur à précathode en polymère conducteur, le bain électrolytique utilisé pour la fabrication de la couche de diélectrique a un effet nocif destructeur sur le polymère lui-même. Comme on l'a constaté, une opération de post-oxydation conduite dans ces conditions, a bien un effet positif sur la restriction du courant de fuite final. Mais, du fait de la nature très particulière du matériau utilisé pour réaliser le polymère conducteur, cette post-oxydation doit être payée d'une détérioration généralement inacceptable des caractéristiques électriques du composant telle que par exemple sa capacité et sa résistance équivalente série, comme l'attestent les résultats du tableau I suivant :

**TABELAU I**

| Durée de la réoxydation | C (µF) 100 Hz | Variation de C 100Hz -> 10KHz | RES (ohms) à 100 KHz | If (µA) 10V |
|---|---|---|---|---|
| 0 | 10.8 | -14 % | 0.35 | 3000 |
| 30 mn | 7.5 | -50 % | 1.02 | 12 |
| 120 mn | 1.8 | -86 % | 24.00 | 5 |

Sur ce tableau I on a représenté des variations des caractéristiques électriques d'un condensateur à anode en aluminium et à polymère conducteur en polypyrrole dont l'anode a été post-oxydée avec la même solution électrolytique d'acétate d'ammonium qui avait servie à l'oxydation de l'anode pour réaliser la couche de diélectrique. La première colonne du tableau I donne le temps de l'opération de réoxydation dans une solution d'acétate d'ammonium à pH = 6,9 ; la deuxième colonne donne la variation de la capacité en micro-farads pour une fréquence de 100 Hz ; la troisième colonne donne le taux de diminution de la capacité C pour un domaine de fréquence de 100 Hz à 10 KHz ; la quatrième colonne donne les variations de la résistance série RES en ohms à 100 KHz et la cinquième colonne donne la valeur du courant de fuite I_{f} en micro-Ampères sous une tension de 10 V.

L'examen du tableau I montre que si la valeur du courant de fuite diminue de façon spectaculaire lorsque la durée de l'opération de réoxydation augmente, en revanche les deux caractéristiques électriques importantes que sont la capacité et la résistance équivalente en série, subissent pour l'une une diminution et pour l'autre une augmentation dans des proportions inacceptables. C'est pourquoi jusqu'à ce jour la fabrication de condensateurs électrolytiques à polymère conducteur s'était révélée très délicate, voir impossible.

La présente invention a précisément mis en évidence que pour les polymères conducteurs réalisés dans les matériaux précédemment évoqués, la porosité était suffisante pour laisser passer un électrolyte d'une autre nature que celui qui avait servi à former le diélectrique dans le premier bain lors de la première oxydation anodique. Elle a également montré qu'il était possible d'effectuer la postoxydation anodique en recourant à des ions dopants inoffensifs chimiquiement vis-à-vis du polymère conducteur.

A cet effet, l'invention a pour objet un procédé de fabrication de condensateurs électrolytiques à précathode en polymère conducteur et à faible courant de fuite comportant les étapes de :
- réalisation d'une anode en un métal choisi parmi l'aluminium et le tantale que l'on traite dans un premier bain électrolytique pour la recouvrir d'une couche mince d'oxyde constituant le diélectrique du condensateur ;
- dépôt sur cette couche diélectrique, par traitements successifs dans un second bain d'un monomère puis dans un troisième bain contenant l'oxydant plus éventuellement le dopant (dans le cas où les deux composés sont différents), d'une couche de polymère conducteur constituant la précathode du condensateur ;
- réoxydation de l'anode recouverte du polymère conducteur par traitement dans un quatrième bain électrolytique ;
- fixation d'une cathode sur la précathode ;
caractérisé en ce que le quatrième bain est constitué d'une solution aqueuse d'hydroxybenzènesulfonate de sodium ou d'une solution aqueuse de sulfate de sodium.

Comme on le voit de ce qui précède, la liberté du choix du quatrième bain permet de le réaliser en recourant à un produit chimique inoffensif vis-à-vis du polymère conducteur et d'éviter par conséquent les dégradations des caractéristiques électriques du composant telles qu'elles ont été rappelées précédemment à propos de l'art antérieur. Elles permettent également de choisir la nature des ions dopants oxydants pour qu'ils soient chimiquement inertes vis-à-vis du matériau constituant le polymère conducteur.

Selon une caractéristique importante et fréquemment mise en oeuvre du procédé, objet de l'invention, les ions dopants du quatrième bain sont identiques à ceux utilisés dans le troisième bain pour doper le polymère et le rendre conducteur.

Selon l'invention et de manière avantageuse, le polymère conducteur est fabriqué à partir d'un monomère choisi parmi le pyrrole, le thiophène, l'aniline, le benzène et leurs dérivés substitués, l'ion dopant étant un anion choisi parmi le perchlorate, le chlore, le sulfate et les composés de type sulfonates.

Les composés de type sulfonates utilisables comme anions de dopage, peuvent être choisis notamment parmi le benzènesulfonate, l'alkylbenzènesolfonate, l'hydroxybenzènesulfonate et le naphtalènesulfonate.

Selon une variante intéressante du procédé de fabrication de condensateurs électrolytiques, objet de l'invention, les étapes de préparation du polymère conducteur et de post-oxydation de l'anode sont effectués simultanément, en alternant de courtes séquences de chaque étape par immersions successives de l'anode oxydée dans le troisième et le quatrième bains.

Selon des modes de mise en oeuvre avantageux de la présente invention, le bain électrolytique de post-oxydation anodique peut être constitué d'une solution aqueuse d'hydroxybenzènesulfonate de sodium ou d'une solution aqueuse de sulfate de sodium.

De toute façon, l'invention sera mieux comprise en se référant à la description qui suit de cinq exemples de mise en oeuvre qui seront décrits à titre illustratif et non limitatif en se référant au tableau II ainsi qu'à la figure 2 qui montre l'évolution du courant de fuite d'un condensateur électrolytique à anode en aluminium et un polymère conducteur en polypyrrole avant et après l'opération de réoxydation.

### Exemple 1

Il s'agit d'un exemple dans lequel la synthèse du polymère est effectuée par voie chimique.

Une feuille d'aluminium, constituant l'anode du condensateur est préalablement gravée puis recouverte d'une fine couche d'oxyde obtenue par oxydation anodique sous 80 V, à 80°C dans une solution aqueuse (premier bain) contenant 3% de tartrate d'ammonium.

Après un abondant rinçage dans de l'eau déionisée on réalise un dépôt de polypyrrole sur cette anode en la trempant successivement dans une solution aqueuse de 0,5 M de monomère de pyrrole (deuxième bain), puis dans une solution aqueuse de 0,1 M d'hydroxybenzènesulfonate ferrique contenant les anions dopants (troisième bain).

Après un recouvrement complet de l'oxyde par une couche épaisse de polypyrrole dopé, l'anode est placée dans une cellule électrochimique afin d'effectuer la post-oxydation. L'anode est alors soumise à un potentiel positif de 30 V, l'électrolyte est constitué d'une solution aqueuse 0,1 M d'hydroxyxbenzènesulfonate de sodium (quatrième bain) et la contre électrode est en acier inoxydable. La post-oxydation est effectuée à température ambiante jusqu'à l'obtention d'un courant inférieure au microampère par centimètre carré d'anode. La solution d'hydroxybenzènesulfonate n'altère pas les propriétés de conduction du polypyrrole.

Après un abondant rinçage dans de l'eau déionisée, l'anode est ensuite séchée sous vide (de l'ordre de 10⁻³ Torr) à une température d'environ 80°C pendant une douzaine d'heures.

Un contact de cathode est ensuite réalisé sur la couche de polypyrrole par l'intermédiaire d'une pâte à l'argent de manière à pouvoir mesurer les caractéristiques électriques du condensateur électrolytique tout solide ainsi obtenu (cf. tableau II).

### Exemple 2

Une anode en aluminium recouverte de sa couche de diélectrique telle que celle décrite dans l'exemple 1 est recouverte d'une couche de polypyrrole par trempages successifs dans une solution 0,5 M de pyrrole dans de l'eau (deuxième bain), puis dans une solution aqueuse 0,05 M de sulfate ferrique (troisième bain).

Après un recouvrement complet, une post-oxydation est réalisée de la même manière que dans l'exemple 1. La différence réside néanmoins dans la composition de l'électrolyte qui est ici constitué d'une solution aqueuse 0,5 M de sulfate de sodium, jouant le rôle de dopant (quatrième bain). La suite de l'opération est identique à celle de l'exemple 1.

### Exemple 3

Cet exemple est relatif au mode de mise en oeuvre dans lequel la préparation du polymère conducteur et la postoxydation de l'anode sont effectuées simultanément de façon progressive.

Une anode en aluminium identique à celle de l'exemple 1 est oxydée pour faire le diélectrique puis est successivement trempée dans une solution 0,5 M de pyrrole dans de l'eau, puis dans une solution aqueuse 0,1 M d'hydroxybenzènesulfonate ferrique (anion dopant) et enfin durant quelques minutes environ dans la cellule électrochimique précédemment décrite dans l'exemple 1 et contenant une solution aqueuse 1 M d'hydroxybenzènesulfonate de sodium (quatrième bain et dopant). L'ensemble de ce cycle est répété une cinquantaine de fois environ permettant d'obtenir un recouvrement complet du diélectrique par du polypyrrole ainsi qu'une réoxydation correcte.

La suite de l'opération est identique à l'exemple 1.

### Exemple 4

Une anode de condensateur électrolytique constituée d'un fritté de tantale, compacté autour d'un fil du même métal (borne positive), est préalablement oxydée à 70 V dans une solution aqueuse contenant 0,01% d'acide orthophosphorique à 85°C de manière à former une fine couche diélectrique. La suite de l'opération est identique à celle de l'exemple 1, excepté la tension de post-oxydation qui est ici de 35 V ; la post-oxydation est effectuée à température ambiante jusqu'à l'obtention d'un courant inférieur au microampère.

### Exemple 5

Un fil d'aluminium préalablement gravé et compacté de manière à former une pelote constituant une anode de condensateur est recouvert d'une fine couche d'oxyde obtenue par oxydation anodique sous 40 V, à température ambiante dans une solution aqueuse contenant 20% d'acétate d'ammonium, 3% de sulfate de potassium et de l'acide acétique permettant d'ajuster le pH à une valeur de 6,9.

La suite de l'opération est identique à celle de l'exemple 1, excepté la tension de post-oxydation qui est ici de 20 V. La post-oxydation est effectuée à température ambiante jusqu'à l'obtention d'un courant inférieur au microampère.

Les tableaux II et III ci-après rassemblent les caractéristiques électriques des composants obtenus avec les exemples 1, 3 et 4.

**Tableau II**

| Exemple | C (µF/cm²) 100 Hz | Variation de C 100Hz -> 10KHz | RES (ohms.cm²) 100 KHz | If (µA/cm²) 10V |
|---|---|---|---|---|
| 1 | 3.8 | -5.5 % | 0.23 | 0.40 |
| 3 | 3.3 | -6.1 % | 0.19 | 0.25 |

**Tableau III**

| Exemple | C (µF) 100 Hz | Variation de C 100Hz -> 10KHz | RES (ohms) 100 KHz | If (µA) 10V |
|---|---|---|---|---|
| 4 | 9.2 | -1.5 % | 0.25 | 0.05 |

On voit que, partout, le courant de fuite est diminué alors que RES et "variation de C" restent faibles (comparativement au tableau I).

La figure 2 montre l'évolution du courant de fuite (If) d'un condensateur électrolytique aluminium/polypyrrole avant (10) et après (12) réoxydation en fonction du rapport tension d'utilisation Um sur tension d'oxydation Uf. Le courant de fuite If est représenté en ordonnée selon une échelle logarithmique.

## Revendications

1. Procédé de fabrication de condensateurs électrolytiques à précathode en polymère conducteur et à faible courant de fuite comportant les étapes de :
- réalisation d'une anode (2) en un métal choisi parmi l'aluminium et le tantale que l'on traite dans un premier bain électrolytique pour la recouvrir d'une couche mince d'oxyde (4) constituant le diélectrique du condensateur ;
- dépôt sur cette couche diélectrique (4), par traitements successifs dans un second bain d'un monomère, puis dans un troisième bain contenant l'oxydant, plus parfois le dopant, d'une couche de polymère conducteur (6) constituant la précathode du condensateur ;
- réoxydation de l'anode recouverte du polymère conducteur par traitement dans un quatrième bain électrolytique;
- fixation d'une cathode sur la précathode ;
caractérisé en ce que le quatrième bain est constitué d'une solution aqueuse d'hydroxybenzènesulfonate de sodium ou d'une solution aqueuse de sulfate de sodium.

2. Procédé de fabrication de condensateurs électrolytiques selon la revendication 1, caractérisé en ce que le troisième bain contient un dopant servant au dopage du polymère pour le rendre conducteur et en ce que les ions du quatrième bain sont identiques à ceux du troisième bain.

3. Procédé de fabrication de condensateurs électrolytiques selon l'une quelconque des revendication 1 à 2 précédentes, caractérisé en ce que le polymère conducteur est fabriqué à partir d'un monomère choisi parmi le pyrrole, le thiophène, l'aniline, le benzène et leurs dérivés substitués, l'ion dopant étant un anion choisi parmi le perchlorate, le chlore, le sulfate et les composés de type sulfonates.

4. Procédé de fabrication de condensateurs électrolytiques selon la revendication 3, caractérisé en ce que les composés de type sulfonate sont choisis parmi le benzènesulfonate, l'alkylbenzènesulfonate, l'hydroxybenzènesulfonate et le naphtalènesulfonate et ses dérivés.

5. Procédé de fabrication de condensateurs électrolytiques selon l'une quelconque des revendications 1 et 2, caractérisé en ce que les étapes de préparation du polymère conducteur et de postoxydation de l'anode sont effectuées simultanément, en alternant de courtes séquences de chaque étape par immersions successives de l'anode oxydée dans le deuxième, troisième et le quatrième bain.

## Patentansprüche

1. Verfahren zur Herstellung von Elektrolytkondensatoren mit Präkathode aus leitfähigem Polymer und mit niedrigem Leckstrom, umfassend die Schritte der:
- Herstellung einer Anode (2) aus einem unter Aluminium und Tantal gewählten Metall, die man in einem ersten Elektrolytbad behandelt, um sie mit einer dünnen Oxidschicht (4) zu überziehen, die das Dielektrikum des Kondensators bildet;
- Abscheidung einer Schicht von leitfähigem Polymer (6), die die Präkathode des Kondensators bildet, auf dieser dielektrischen Schicht (4) durch aufeinanderfolgende Behandlungen in einem zweiten Bad eines Monomers, dann in einem dritten Bad, welches das Oxidationsmittel, dazu manchmal das Dotierungsmittel enthält;
- Reoxidation der mit dem leitfähigen Polymer überzogenen Anode durch Behandlung in einem vierten Elektrolytbad;
- Anbringung einer Kathode auf der Präkathode;
dadurch gekennzeichnet, daß das vierte Bad aus einer wäßrigen Lösung von Natrium-hydroxybenzolsulfonat oder aus einer wäßrigen Lösung von Natriumsulfat besteht.

2. Verfahren zur Herstellung von Elektrolytkondensatoren nach Anspruch 1, dadurch gekennzeichnet, daß das dritte Bad ein Dotierungsmittel enthält, das zur Dotierung des Polymers dient, um es leitfähig zu machen, und dadurch, daß die Ionen des vierten Bades mit denen des dritten Bades identisch sind.

3. Verfahren zur Herstellung von Elektrolytkondensatoren nach einem der vorhergehenden Ansprüche 1 bis 2, dadurch gekennzeichnet, daß das leitfähige Polymer aus einem unter Pyrrol, Thiophen, Anilin, Benzol und ihren substituierten Derivaten gewählten Monomer hergestellt wird, wobei das dotierende Ion ein unter Perchlorat, Sulfat und den Verbindungen vom Sulfonattyp gewähltes Anion ist.

4. Verfahren zur Herstellung von Elektrolytkondensatoren nach Anspruch 3, dadurch gekennzeichnet, daß die Verbindungen vom Sulfonattyp unter Benzolsulfonat, Alkylbenzolsulfonat, Hydroxybenzolsulfonat und Naphtalinsulfonat und seinen Derivaten gewählt werden.

5. Verfahren zur Herstellung von Elektrolytkondensatoren nach einem der Ansprüche 1 und 2, dadurch gekennzeichnet, daß die Schritte zur Herstellung des leitfähigen Polymers gleichzeitig ausgeführt werden, indem man nacheinander kurze Sequenzen jedes Schritts durch aufeinanderfolgendes Eintauchen der oxidierten Anode in das zweite, dritte und vierte Bad ausführt.

## Claims

1. Process for the production of electrolytic capacitors having a conductive polymer precathode and a low leakage current comprising the following stages:
- producing an anode (2) from a metal chosen from among aluminium and tantalum, which is treated in a first electrolytic bath in order to cover it with a thin oxide film (4) constituting the dielectric of the capacitor,
- deposition on said dielectric film (4), by successive treatments in a second bath of a monomer and then in a third bath containing the oxidizing agent and in certain cases the dopant, of a conductive polymer layer (6) constituting the precathode of the capacitor,
- reoxidation of the anode covered with the conductive polymer by treatment in a fourth electrolytic bath,
- fixing a cathode on the precathode,
characterized in that the fourth bath is constituted by an aqueous hydroxybenzene sulphonate solution or an aqueous sodium sulphate solution.

2. Process for the production of electrolytic capacitors according to claim 1, characterized in that the ions of the fourth bath are identical to those of the third bath used for doping the polymer in order to make it conductive.

3. Process for the production of electrolytic capacitors according to either of the claims 1 and 2, characterized in that the conductive polymer is produced from a monomer chosen from among pyrrole, thiophene, aniline, benzene and their substituted derivatives, the doping ion being an anion chosen from among perchlorate, chlorine, sulphate and compounds of the sulphonate type.

4. Process for the production of electrolytic capacitors according to claim 3, characterized in that the compounds of the sulphonate type are chosen from among benzene sulphonate, alkyl benzene sulphonate, hydroxybenzene sulphonate, naphthalene sulphonate and derivatives thereof.

5. Process for the production of electrolytic capacitors according to either of the claims 1 and 2, characterized in that the stages of preparing the conductive polymer and post-oxidizing the anode are performed simultaneously, alternating short sequences of each stage by successive immersions of the oxidized anode in the second, third and fourth baths.
